# EUROPÄISCHE PATENTANMELDUNG

(11) **EP 2 202 601 A2**
(43) Veröffentlichungstag der Anmeldung: **30.06.2010**
(21) Anmeldenummer: 09014092.2
(22) Anmeldetag: 11.11.2009
(51) Int. Cl.: G05D 1/02

(54) **Navigation für insbesondere unbemannte Fahrzeuge**

(30) Priorität: 22.12.2008 DE 102008064440
(71) Anmelder: Rheinmetall Landsysteme GmbH, 24107 Kiel (DE)
(72) Erfinder: Grosch, Hermann Dr., 29336 Nienhagen (DE)
(74) Vertreter: Dietrich, Barbara

(57) **Zusammenfassung**

Vorgeschlagen wird ein so genanntes Referenznavigationsverfahren, dass sich dadurch auszeichnet, dass es ein koordinatenloses Verfahren ist. Zur Navigation werden bei einem ersten Fahrzeug (10) und bei einem weiteren Fahrzeug (20) ein 3D-Scanner (11, 21) eingebunden. Der Scanner (11) des ersten Fahrzeuges (10) zeichnet die erzeugt Bilder vom Weg (102) auf. Diese Weg- bzw. Bilddaten werden gespeichert und dem / den weiteren Fahrzeuge(n) (20) gleich oder zu einem späteren Zeitpunkt übermittelt. Die Übermittlung kann dabei direkt, beispielsweise per Funk, oder indirekt durch Übergabe eines Informationsträger, wie CD etc., erfolgen. Das zweite Fahrzeug (20) nimmt seinerseits Bilddaten der Umgebung über seinen Scanner (21) auf. Diese werden mit den Bilddaten des ersten Fahrzeuges (10) abgeglichen, korreliert.

## Beschreibung

Die Erfindung betrifft ein Verfahren zum Navigieren von wenigstens zwei, insbesondere unbemannte Fahrzeuge, die in einer Art Master-Slave-Betrieb geführt werden.

Mit der DE 10 2004 003 055 A1 wird eine Anordnung von einem ersten und mindesten einem weiteren Fahrzeug in einem lose koppelbaren nicht spurgebundenen Zugverband publiziert. Vorgeschlagen wird ein bemanntes oder unbemanntes Master-Fahrzeug, welche ein Slave-Fahrzeug wahlweise vor oder nach sich führen kann. Dabei kann ein Slave-Fahrzeug zum Master gemacht werden und umgekehrt. Zum Steuern des Zugverbandes kann wahlweise auf die Bedienelemente des geführten oder führenden Fahrzeuges zugegriffen werden. Dabei kann ein führendes Fahrzeug die Bedienelemente des geführten Fahrzeuges verwenden. Zur Kopplung ist eine elektronische Deichsel vorgesehen.

Mit der DE 102 24 939 A1 wird eine elektronische Deichsel zur autonomen Führung einer Triebachs-Anhängers beschrieben.

Elektronische Deichseln haben den Nachteil, dass eine unterbrechungsfreie optische Sicht zwischen dem Master und dem Slave erforderlich ist. Bei stark strukturiertem Gelände sind nur kleine Fahrzeugabstände möglich.

Grundsätzlich kann die Kopplung zwischen Master und Slave über ein GPS gestütztes Verfahren erfolgen. Dabei werden die Bahn- bzw. Wegdaten des Masters an den Slave über Funk übertragen und dort in der Kursberechnung berücksichtigt.

So beschäftigt sich die WO 99/18482 A1 mit einer Navigation zwischen einem Masterfahrzeug und einem via Satellit gesteuerten unbemannten Fahrzeug.

Auch die US 2002/0165649 A1 offenbart ein Verfahren und eine Vorrichtung zur Navigation von Fahrzeugen. Ein oder mehrere Slave-Fahrzeuge werden hierbei von einem Master-Fahrzeug geführt. Das Slave-Fahrzeug erhält dazu die Position des Masters und seine eigene. Wenn beide Positionen bekannt sind, erhält das Slave-Fahrzeug eine eigene Wegzuweisung, d. h., den Kurs und die Richtung, in welche es sich bewegen soll. Dadurch können mehrere Slave-Fahrzeuge einem Master ohne weitere Kontakte mit dem Master selbst folgen. Die sind dabei autark. Beide arbeiten mit Koordinaten.

Aus der DE 197 22 292 A1 sind ein Verfahren und eine Anordnung zur Absicherung einer beweglichen Arbeitsstelle auf einer mehrspurigen Richtungsfahrbahn bekannt. Die Anordnung besteht aus einem Arbeitsfahrzeug und wenigstens einer Verkehrseinrichtung. Um die vom Arbeitsfahrzeug beabstandete Verkehrseinrichtung selbsttätig mit dem Arbeitsfahrzeug mitführen zu können, sind ein Messsystem zur Fahrbewegungserfassung des Arbeitsfahrzeuges, eine fernsteuerbare Fahreinrichtung zur selbst fahrenden Bewegung der Verkehrseinrichtung und eine elektronische Steuereinheit zur Steuerung der Fahreinrichtung nach Maßgabe der erfassten Fahrbewegungen des Arbeitsfahrzeuges vorgesehen.

Das gesteuerte Führen eines Slaves durch einen Master ist des Weiteren auch mit einer INU (inertial navigation unit) möglich, die Richtung, Geschwindigkeit und Raumlage eines Fahrzeuges bestimmt. Zur Kalibrierung der INU werden in der Regel GPS oder trigonometrische Punkte herangezogen. Nachteilig ist der hohe technische Aufwand sowie die mangelnde Genauigkeit.

Die Erfindung stellt sich daher die Aufgabe, ein Navigationsverfahren aufzuzeigen, welches auch im unwegsamen Gelände eine ausreichend gute Navigation von insbesondere unbemannten Fahrzeugen ermöglicht.

Gelöst wird die Aufgabe durch die Merkmale des Patentanspruchs 1. Vorteilhafte Ausführungen sind in den Unteransprüchen aufgezeigt. Eine Vorrichtung, welches das Verfahren umsetzen kann, wird mit dem Patentanspruch 6 angegeben.

Der Erfindung liegt die Idee zugrunde, ein so genanntes Referenznavigationsverfahren zu nutzen. Dieses zeichnet sich dadurch aus, dass es ein koordinatenloses Verfahren ist. Zur Navigation werden bei einem ersten Fahrzeug (Master) und bei wenigstens einem weiteren Fahrzeug (Slave) jeweils wenigstens ein 3D-Scanner eingebunden. Der Scanner des ersten Fahrzeuges zeichnet die erzeugten Bilder vom Weg des Masters auf. Diese Weg- bzw. Bilddaten werden gespeichert und dem / den Slave-Fahrzeuge(n) gleich oder zu einem späteren Zeitpunkt übermittelt. Die Übermittlung kann dabei direkt, beispielsweise per Funk, oder indirekt durch Übergabe eines Informationsträger, wie CD etc., erfolgen.

Das Slave-Fahrzeug nimmt seinerseits Bilddaten der Umgebung über seinen Scanner auf. Diese werden mit den Bilddaten des Masters abgeglichen, korreliert.

D.h., der Master und der / die Slave verfügen über einen 3D-Scanner, der das Gelände während der Fahrt mit allen vorzugsweise markanten Objekten, beispielsweise Bäume, Hügel, Gebäude etc., um das Fahrzeug herum kontinuierlich als Entfernungsbild, insbesondere die Abstände zu den markanten Objekten, erfasst und speichert einen vorgebbaren Scan-Radius, vorzugsweise ca. 30m. Diese Scans werden vom Master an den / die nachfolgenden Slave übertragen, welche den gleichartigen Scan der Umgebung durchführt. Der Slave korreliert die vom Master empfangenen 3D-Scans mit den eigenen Scans. Das Ergebnis der Korrelation ist u. a. die Position sowie die, zur Orientierung des Masters relativen Orientierung des Slave im Raum. Damit ist der Slave in der Lage, dem vorgegebenen Weg des Masters zu folgen.

Dem Salve werden für die Korrelation so genannte Stützwerte zur Verfügung gegeben, um annähernd schnell eine Wegkorrektur vornehmen zu können. Dabei greift er auf weitere Stützwerte zurück, wenn der Vergleich eine Abweichung vom vorgegebenen Weg / Kurs ergibt, so dass der Slave auf den Sollkurs zurückgeführt wird.

Beide Fahrzeuge sollten beim Start ihres Weges sich in einer Position befinden, in der sie über einen näherungsweise gleichen Startscan verfügen. Startet der Slave wesentlich später als der Master, ist der Slave in die Ausgangsstellung des Masters zu bringen. Fahren beide gleichzeitig, ist es am Einfachsten, wenn die Fahrzeuge beim Start hintereinander auf dem zu fahrenden Kurs stehen.

Der Aufwand für das Korrelationsverfahren wird erheblich vereinfacht, wenn die Fahrzeuge über einen Raumwinkelsensor verfügen. Damit kann zu jedem Startscan die Orientierung des Fahrzeuges (Masters, Slave) zu einer Referenz, z. B. magnetisch Nord, bestimmt werden.

Der Abstand zwischen den Fahrzeugen ist im Allgemeinen frei vorwählbar.

Die Scans werden vom Master als auch vom Slave kontinuierlich erfasst. Da sich die Fahrzeuge bewegen, ergeben sich zur Umgebung unterschiedliche Aspektwinkel und damit unterschiedliche Entfernungsbilder. Aus einer Verrechnung dieser Bilder kann zudem die Geschwindigkeit der Fahrzeuges, bzw. des Masters und der Slave, und die Distanz der gefahrenen Wegstrecke berechnet werden. Die Wegstrecken können an den Slave übertragen werden, der damit seine Geschwindigkeit so regeln kann, dass ein vorgegebener Abstand zum Master eingehalten wird.

Die von einem ersten Fahrzeug (beispielsweise Master) aufgenommenen Umgebungsbilder können auch für ein späteres Abfahren dieser Strecke durch ein anderes oder gleiches Fahrzeug genutzt werden. Um dabei geringfügige Umweltveränderungen zu berücksichtigen, kann ein so genannter Übereinstimmungsgrad der aufgenommenen Bilder festgelegt werden. Das beginnt bei der Festlegung der markanten Objekte und der prozentualen Übereinstimmungsquote mit diesen.

Das Verfahren dient insbesondere in vorteilhafter Weise zur Reduzierung des Einsatzes von Personen in gefährdeten Gebieten. Es ist unabhängig von mit Koordinaten arbeitenden Systemen und in seiner Genauigkeit beständig, kann in insbesondere bewaldeten und unwegsamen Gebieten angewendet werden.

Trotz dieses Vorteiles kann natürlich das Legen von GPS- bzw. Koordinatendaten auf das gescannte Bild vorgesehen werden. Dies erhöht die eigene Sicherheit der Fahrzeuge.

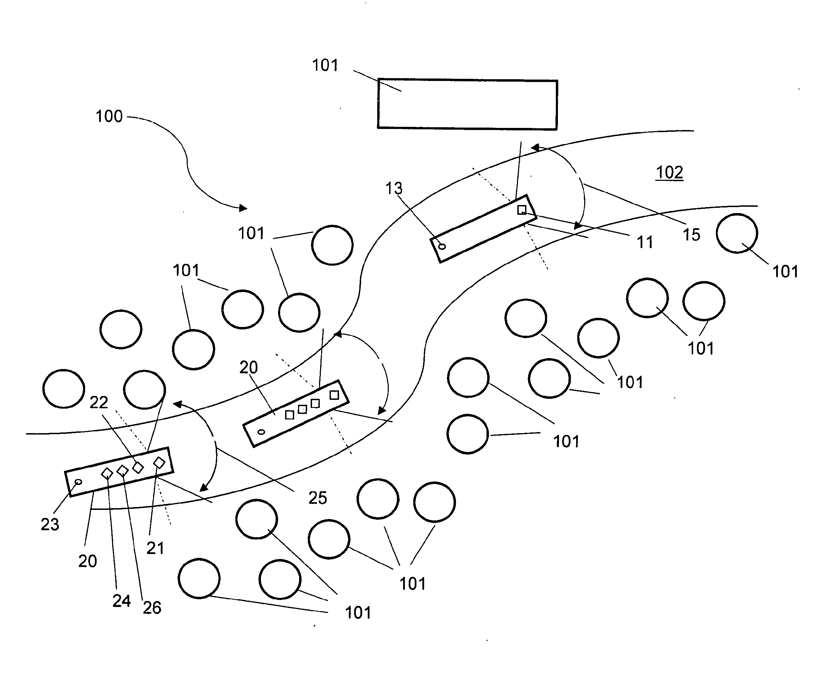

Anhand eines einfachen Ausführungsbeispiels mit Zeichnung soll die Erfindung näher erläutert werden. Es zeigt die einzige Figur ein Master-Fahrzeug 10 und hier mit zwei Slave-Fahrzeugen 20 im Gelände 100. Das Master-Fahrzeug 10 sowie die Slave-Fahrzeuge 20 weisen nicht näher dargestellte Mittel zur unbemannten und / oder bemannten Führung auf, auf welche der Übersichtlichkeit halber hier nicht weiter eingegangen und ihre Funktion als bekannt angenommen wird.

Das Master-Fahrzeug 10 sowie das/die Slave-Fahrzeuge 20 verfügen über einen 3D-Scanner 11, 21, mit dessen Hilfe das Gelände 100 abgescannt wird. Die Bilddaten des Master-Fahrzeuges 10 werden an eine Vergleichseinheit 22 des Slave-Fahrzeuges 20 hier via Funkt 13, 23 übertragen.

Beim Scannvorgang des Master-Scanners 11 werden vorzugsweise programmtechnisch markante Objekte 101 in einer Verarbeitungseinheit 14 festgelegt. Diese werden ebenfalls an das Slave-Fahrzeug 20 übermittelt. Alternativ können markante Objekte 1 Objektgruppen 101 auch nachträglich und dann sogar manuell festgelegt werden. Die nachträgliche Festlegung bietet sind bei einer Bildnachbearbeitung bzw. Bildaufbereitung insbesondere dann an, wenn die Daten für ein zeitlich späteres Abfahren eines Slave-Fahrzeuges genutzt werden. Die Auswerteeinheit 24 der Slave-Fahrzeuge 20 vergleicht die Daten des eigenen Scan 25 mit denen des Master-Scan 15 durch Korrelation (oder dergleichen). Dabei werden Stützwerte aus einem Speicher 26 der Slave-Fahrzeuge zur Feststellung des Einhaltens des vorgegebenen Weges 102 herangezogen. Weitere hinterlegte Stützwerte dienen zudem zum Korrigieren des vom Slave-Fahrzeuges 20 eingeschlagenen Weges, wenn dieser vom vorgegebenen abweicht.

Der Winkelbereich des Master- und Slave-Scan 15, 25 ist frei wählbar, wobei auch mehrere 3D-Scanner an den Fahrzeugen 10 und 20 installiert werden können, so dass auch der Winkelbereich des abscannbaren Umgebungsbildes um das Fahrzeug 10, 20 verbreitert werden kann.

Als Richtreferenz weisen das Master-Fahrzeug 10 sowie die Slave-Fahrzeuge 20 vorzugsweise einen weiteren Sensor (nicht näher dargestellt) zur Lieferung eines zusätzlichen Magnetfeldvektors auf.

## Patentansprüche

1. Verfahren zum Führen eines ersten und wenigstens eines weiteren Fahrzeuges (10, 20), **dadurch gekennzeichnet, dass** vom ersten Fahrzeug (10) ein Umgebungsbild des das erste Fahrzeug (10) umgebenden Geländes (100) als Entfernungsbild aufgenommen wird, welches dem weiteren Fahrzeug (20) übermittelt als Kursvorgabe auf einem durch das erste Fahrzeug (10) abgefahrenen und abgescannten Weg (102) dient.

2. Verfahren nach Anspruch 1, **dadurch gekennzeichnet, dass** beim Scannvorgang eines Scanners (11) des ersten Fahrzeuges (10) programmtechnisch markante Objekte / Objektgruppen (101) am Weg (102) festgelegt werden.

3. Verfahren nach Anspruch 1, **dadurch gekennzeichnet, dass** markante Objekte 1 Objektgruppen (101) im aufgenommenen Umgebungsbild nachträglich und dann sogar manuell festgelegt werden.

4. Verfahren nach einem der Ansprüche 1 bis 3, **dadurch gekennzeichnet, dass** eine Auswerteeinheit (24) der Slave-Fahrzeuge (20) die Daten des eigenen Scan (25) mit denen des Master-Scan (15) beispielsweise durch Korrelation abgleicht.

5. Verfahren nach einem der Ansprüche 1 bis 4, **dadurch gekennzeichnet, dass** Stützwerte aus einem Speicher (26) der Slave-Fahrzeuge (20) zur Feststellung des Einhaltens des vorgegebenen Weges (102) herangezogen werden, wobei diese und weitere hinterlegte Stützwerte zum Korrigieren des vom Slave-Fahrzeuges (20) eingeschlagenen Weges herangezogen werden, wenn dieser Weg vom vorgegebenen Weg (102) abweicht.

6. Vorrichtung zum Führen eines ersten und wenigstens eines weiteren Fahrzeuges (10, 20), **dadurch gekennzeichnet, dass** ein erstes Fahrzeug (10) zumindest wenigstens einen 3D-Scanner (11) sowie eine Verarbeitungseinheit (14) und einen Sender (13) zum Datenaustausch mit wenigstens einem weiteren Fahrzeug (20) aufweist, wobei das wenigstens eine weitere Fahrzeug (20) wenigstens einen 3D-Scanner (21), eine Auswerteeinheit (24) sowie einen Speicher (26) und einen Empfänger (23) besitzt.

7. Vorrichtung nach Anspruch 6, **dadurch gekennzeichnet, dass** als Richtreferenz das Master-Fahrzeug (10) sowie die Slave-Fahrzeuge (20) einen weiteren Sensor zur Lieferung eines zusätzlichen Magnetfeldvektors aufweisen.
